# FASCICULE DE BREVET EUROPEEN

(11) **EP 1 876 681 B1**
(45) Date de publication et mention de la délivrance du brevet: **09.03.2016**
(21) Numéro de dépôt: 07111534.9
(22) Date de dépôt: 02.07.2007
(51) Int. Cl.: H02B 1/48

(54) **Boîte dotée d'un châssis de fixation pour organe électrique**
Gehäuse mit Rahmenvorrichtung zur Befestigung von elektrischen Geräten
Housing with rails for mounting an electrical device

(30) Priorité: 07.07.2006 FR 0606226
(43) Date de publication de la demande: 09.01.2008
(73) Titulaire: Schneider Electric Industries SAS, 92500 Rueil-Malmaison (FR)
(72) Inventeur: Buchy, Stéphane, 67320 Schoenbourg (FR); Larsky, Pierre, 57450 Cappel (FR)
(74) Mandataire: Dufresne, Thierry

(56) Documents cités:
- EP-A1- 0 743 729
- EP-A1- 0 760 546
- DE-A1- 2 253 379
- DE-U- 7 435 266
- DE-U1- 20 205 717
- DE-U1- 29 915 910
- GB-A- 1 053 352

## Description

La présente invention se rapporte à une boîte au fond de laquelle est fixé un châssis de fixation pour un organe électrique ou une platine de fixation d'un organe électrique.

Il est connu par les demandes de brevets EP 0 760 546, FR 2 797 106 et DE29915910 des châssis de fixation pour organes électriques destinés à être insérés dans des coffrets. Ces châssis comportent deux montants fixes métalliques parallèles et un ou plusieurs rails transversaux, également métalliques, s'étendant entre les deux montants fixes. Les rails transversaux sont destinés à recevoir des organes électriques et sont la plupart du temps vissés à leurs extrémités sur les montants fixes.

Ces châssis de l'art antérieur ne permettent pas de :
- gérer l'espace interne du coffret,
- adapter aisément la forme du châssis à la nature et à la forme de l'organe électrique installé,
- manipuler facilement le châssis et,
- pouvoir monter aisément l'organe électrique.

Les boîtes actuellement connues sont destinées à recevoir un ou plusieurs organes électriques ou électroniques tels qu'un circuit imprimé ou un appareillage électrique ou une platine de fixation sur laquelle est fixé un organe électrique. Les boîtes comportent sur leur fond plusieurs plots définissant entre eux différents écartements pour s'adapter à différentes tailles du circuit imprimé ou de la platine de fixation. Cependant, les différents écartements proposés peuvent être inappropriés à la taille de la platine ou du circuit imprimé. Dans cette situation, l'installateur ne dispose souvent pas d'autres solutions que d'employer une autre boîte proposant l'écartement approprié.

Le but de l'invention est donc de proposer une boîte comportant un châssis de fixation permettant à un installateur de pouvoir facilement adapter la taille de son châssis à la taille de son circuit imprimé, de sa platine ou de tout organe électrique.

Ce but est atteint par une boîte électrique telle que définie dans la revendication 1.

Des particularités de la boîte électrique de l'invention sont définies dans les revendications 2 à 13.

D'autres caractéristiques et avantages vont apparaître dans la description détaillée qui suit en se référant à un mode de réalisation donné à titre d'exemple et représenté par les dessins annexés sur lesquels :
- la figure 1 représente en perspective une boîte pour organe électrique dotée d'un châssis de fixation selon l'invention,
- la figure 2 représente en vue de dessus la boîte de la figure 1 dans laquelle est inséré le châssis de fixation pour organe électrique,
- les figures 3 à 5 représentent en perspective le châssis de fixation pour organe électrique dans trois configurations distinctes,
- les figures 6 et 7 représentent en perspective un rail fixe du châssis de fixation, respectivement à l'envers et à l'endroit,
- la figure 8 représente le rail fixe vu en coupe suivant A-A sur la figure 7,
- les figures 9 et 10 représentent en perspective un rail transversal du châssis de fixation, respectivement à l'envers et à l'endroit,
- les figures 11 et 12 représentent en perspective des éléments de rehausse pouvant être fixés sur chacun des rails.

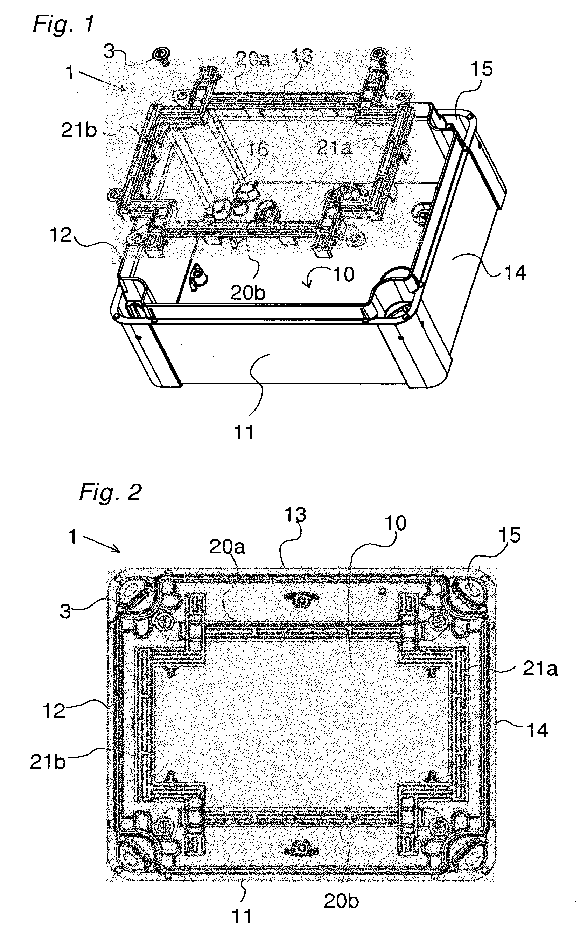

En référence à la figure 1, l'invention concerne une boîte 1, par exemple de forme parallélépipédique, dotée d'un fond 10 et d'une paroi latérale formée de quatre faces latérales 11, 12, 13, 14. Ce type de boîte 1 est par exemple en matériau plastique et comporte à chacun de ses coins un fût 15 destiné à recevoir une vis de fixation d'un couvercle (non représenté). A proximité de chaque fût 15, le fond 10 de la boîte comporte un plot 16 apte à être percé par une vis de fixation 3.

Selon l'invention, la boîte 1 est destinée à recevoir un châssis de fixation 2 pour organe électrique. Ce châssis de fixation 2 est par exemple fabriqué dans un matériau synthétique tel que le plastique.

Il est possible de venir fixer sur le châssis de fixation 2 un ou plusieurs organes électriques tels que par exemple un circuit imprimé ou un appareillage électrique ou également une platine de fixation apte à supporter ces organes électriques. Dans la suite du texte de cette demande, le terme "organe électrique" doit être compris comme englobant tout appareillage électrique ainsi que tout organe électronique tel qu'un circuit imprimé.

Le châssis de fixation 2 selon l'invention comporte deux rails fixes identiques 20a, 20b parallèles fixés sur le fond 10 de la boîte 1 et deux rails transversaux 21 a, 21b identiques parallèles s'étendant perpendiculairement entre les deux rails fixes 20a, 20b. Bien entendu, il est possible de venir fixer plus de deux rails transversaux (21a, 21b) sur les rails fixes.

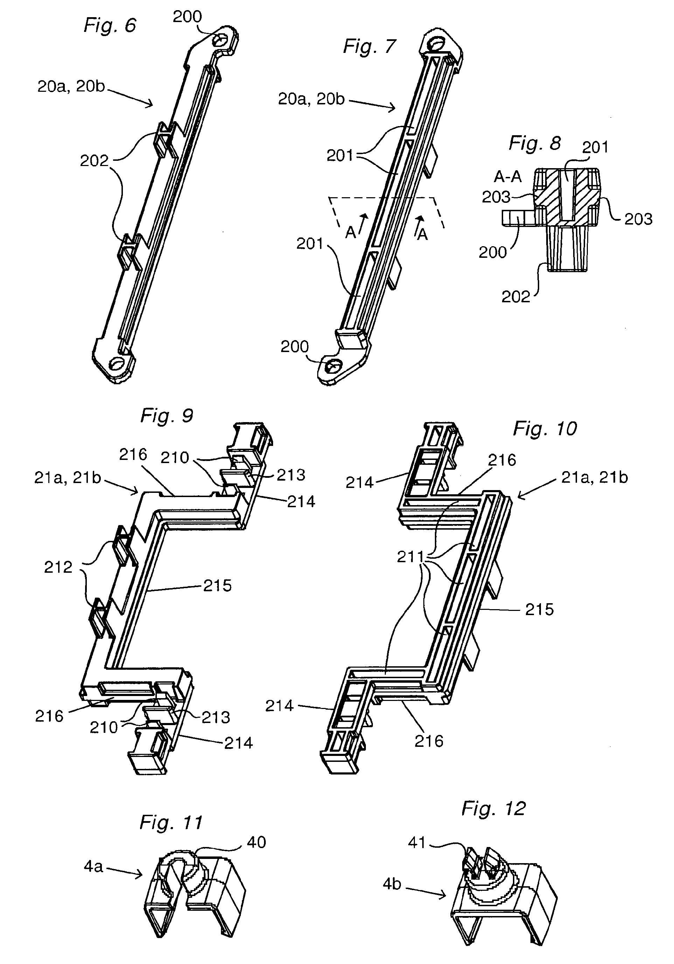

En référence aux figures 6 et 7, chaque rail fixe 20a, 20b comporte à son extrémité un orifice 200 à travers lequel est passée la vis 3 pour fixer le rail fixe 20a, 20b sur le fond 10 de la boîte 1. Chaque rail fixe 20a, 20b s'étend par exemple parallèlement à une face latérale 11, 13 de la boîte 1 et est fixé à travers les deux plots 16 situés dans les coins correspondants de la boîte 1. Dans une variante, chaque rail fixe 20a, 20b pourra comporter à chacune de ses extrémités un moyen de fixation par clipsage apte à coopérer avec des formes correspondantes réalisées dans le fond 10 de la boîte 1 (variante non représentée).

Chaque rail fixe 20a, 20b comporte sur sa face supérieure et sur toute sa longueur des moyens de réception pour la fixation d'un organe électrique, d'une platine de fixation ou de l'extrémité d'un rail transversal. Ces moyens de réception comprennent une ou plusieurs rigoles 201 (trois sur la figure 7) longitudinales à travers lesquelles peuvent être enfoncées en tous points une ou plusieurs vis de fixation pour fixer une extrémité d'un rail transversal 21a, 21 b, un organe électrique tel qu'un circuit imprimé ou une platine de fixation d'un organe électrique. Chaque rail fixe 20a, 20b comporte également des moyens de réception à clipsage. Chaque rail fixe 20a, 20b présente ainsi une section transversale dont le profil est adapté au clipsage d'un organe électrique, de l'extrémité d'un rail transversal 21a, 21b ou d'une platine de fixation d'un organe électrique. Ce profil (figure 8) présente notamment deux ailes saillantes 203 longitudinales s'étendant de part et d'autre du rail fixe 20a, 20b, sur toute la longueur de celui-ci et permettant un emboîtement d'une forme complémentaire d'un organe électrique, d'une platine de fixation ou de l'extrémité d'un rail transversal.

Chaque rail fixe 20a, 20b comporte également sur sa face inférieure située en vis-à-vis du fond 10 de la boîte 1 un ou plusieurs moyens d'appui permettant d'éviter le fléchissement du rail fixe 20a, 20b lors de la fixation d'un organe électrique, d'une platine de fixation ou de l'extrémité d'un rail transversal 21a, 21b. Ces moyens d'appui sont par exemple des plots 202 (au nombre de deux sur la figure 6) espacés formés sur le rail fixe 20a, 20b et venant s'appuyer sur le fond 10 de la boîte 1.

Les deux rails transversaux 21a, 21b s'étendent entre les rails fixes 20a, 20b et sont positionnés l'un par rapport à l'autre de manière à définir entre eux une distance d'écartement d adaptée par exemple à la taille d'un circuit imprimé ou d'une platine de fixation.

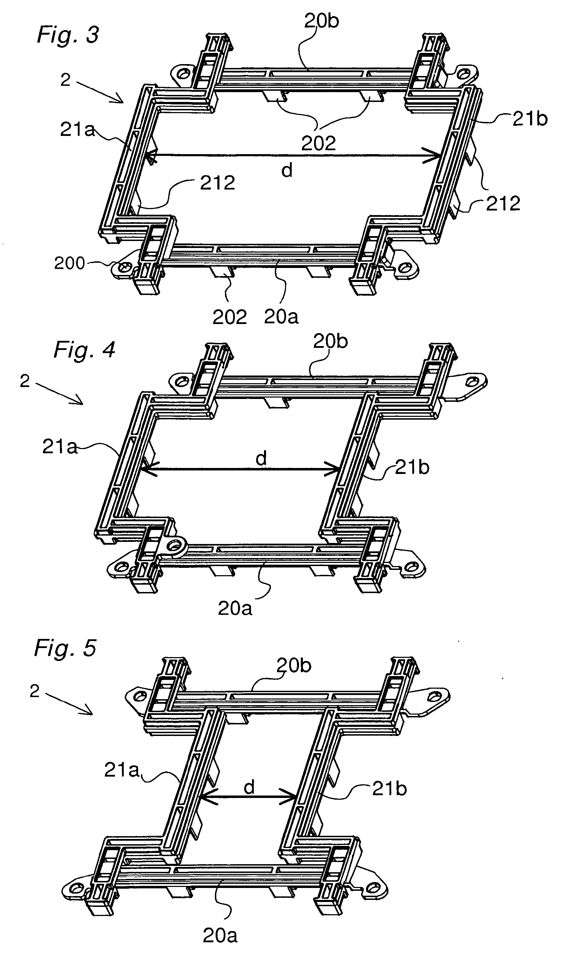

Les rails transversaux 21a, 21b peuvent être fixés sur toute la longueur des rails fixes en étant soit vissés à chacune de leur extrémité sur chacun des rails fixes 20a, 20b, dans une rigole 201 de chacun des rails fixes 20a, 20b, soit clipsés à chacune de leur extrémité sur chacun des rails fixes 20a, 20b. Lorsqu'ils sont clipsés sur les rails fixes 20a, 20b, les rails transversaux 21a, 21b sont mobiles sur les rails fixes de manière à pouvoir facilement régler leur position relative et ajuster la distance d'écartement d (figures 3 à 5). Pour se clipser sur les deux rails fixes 20a, 20b, un rail transversal 21a, 21b comporte à chacune de ses extrémités deux pattes de clipsage 210 apte à s'emboîter sur le profil complémentaire d'un rail fixe 20a, 20b (figure 8). Entre les deux pattes de clipsage 210, le rail transversal comporte également une protubérance 213 venant s'insérer dans une rigole 201 du rail fixe 20a, 20b lors du clipsage de l'extrémité du rail transversal 21a, 21b sur le rail fixe 20a, 20b. Chaque rail transversal est symétrique et présente dans le sens longitudinal une forme générale en oméga s'étendant dans un plan parallèle au fond 10 de la boîte 1. Chaque rail transversal 21a, 21b comporte ainsi deux ailes d'extrémité 214 perpendiculaires aux rails fixes 20a, 20b, comportant chacune deux pattes de clipsage 210 pour s'emboîter sur un rail fixe 20a, 20b et joignant chacune par une partie intermédiaire 216 parallèle aux rails fixes 20a, 20b, une partie centrale 215 perpendiculaire aux rails fixes 20a, 20b formant la tête de la forme en oméga. Grâce à sa forme générale en oméga, le rail transversal 21a, 21b peut contourner les fûts 15 situés aux coins de la boîte 1 et longer au plus près, par sa partie centrale 215, une face latérale 12, 14 de la boîte. Ainsi, en poussant les rails transversaux 21a, 21b au maximum dans des directions opposées vers les deux faces latérales 12, 14, la distance d'écartement d entre les deux rails transversaux 21a, 21b ne se trouve pas limitée par la présence des fûts 15 aux coins de la boîte 1 (figure 2). Les rails transversaux 21a, 21b étant identiques et parfaitement symétriques, ils peuvent être agencés de différentes manières en orientant leur partie centrale 215 vers l'extérieur ou vers l'intérieur de la boîte 1 ce qui fait également varier leur distance d'écartement d (figures 3 à 5). En référence aux figures 3 à 5, les deux rails transversaux 21a, 21b peuvent présenter :
- une première configuration (figure 3) dans laquelle les deux rails transversaux sont symétriques par rapport à un plan perpendiculaire au fond de la boîte, les parties centrales 215 des deux rails étant orientées vers l'extérieur de la boîte 1,
- une deuxième configuration (figure 4) dans laquelle l'un des rails transversaux 21 a a sa partie centrale 215 orientée vers l'extérieur de la boîte 1 et l'autre rail 21b vers l'intérieur de la boîte 1,
- une troisième configuration (figure 5) dans laquelle les deux rails transversaux 21a, 21b sont également symétriques par rapport au plan perpendiculaire au fond de la boîte, les deux rails ayant leur partie centrale 215 orientée vers l'intérieur de la boîte 1.

Comme les rails fixes 20a, 20b, chaque rail transversal 21a, 21b comprend des moyens de réception destinés à la fixation d'un organe électrique ou d'une platine de fixation d'un organe électrique sur toute la longueur du rail transversal s'étendant entre les deux rails fixes 20a, 20b. Cette longueur correspond à celles des deux parties intermédiaires 216 ainsi qu'à celle de la partie centrale 215. Ces moyens de réception comprennent une ou plusieurs rigoles 211 destinées chacune à recevoir en tous points une ou plusieurs vis de fixation pour fixer un organe électrique tel qu'un circuit imprimé ou un appareillage électrique ou une platine de fixation d'un organe électrique. Trois rigoles 211 sont par exemple formées sur la partie centrale 215 et une rigole 211 est par exemple formée sur chaque partie intermédiaire 216 du rail transversal 21a, 21b (figure 10).

Comme les rails fixes 20a, 20b, les rails transversaux 21a, 21b présentent également des moyens de réception adaptés au clipsage d'un organe électrique ou d'une platine de fixation. Pour cela chaque rail transversal 21a, 21b présente sur sa partie centrale 215 et ses parties intermédiaires 216 une section transversale dont le profil est adapté au clipsage d'un organe électrique ou d'une platine de fixation. Les profils de clipsage des rails fixes 20a, 20b et des rails transversaux 21a, 21b sont identiques et correspondent à celui décrit ci-dessus en référence à la figure 8.

Les rails transversaux 21a, 21b comportent en outre chacun sur leur face inférieure située en vis-à-vis du fond 10 de la boîte 1, des moyens d'appui contre le fond 10 de la boîte permettant d'éviter le fléchissement du rail 21a, 21b lors de la fixation d'organes sur le rail. Ces moyens d'appui sont par exemple deux plots 212 espacées formés sur le rail, venant s'appuyant contre le fond 10 de la boîte 1 lors du montage d'un organe électrique ou d'une platine de fixation afin d'éviter le fléchissement du rail (figure 9).

Selon l'invention, il est possible de prévoir des éléments de rehausse 4a, 4b (figures 11 et 12) aptes à se clipser sur les profils des rails fixes 20a, 20b ou des rails transversaux 21a, 21b et destinés à surélever un organe électrique tel qu'un circuit imprimé. Les éléments de rehausse 4a, 4b sont par exemple employés pour surélever un circuit imprimé sur le châssis de fixation 2 afin de ménager un espace suffisant aux soudures formées sous le circuit imprimé. Un élément de rehausse 4a présente par exemple un moyen de fixation pour le circuit imprimé tel qu'un orifice 40 pour recevoir une vis de fixation destinée au vissage du circuit imprimé. Un élément de rehausse 4b peut également présenter en alternative des pattes de clipsage 41 destinées au clipsage du circuit imprimé sur l'élément de rehausse 4b.

Il est bien entendu que l'on peut, sans sortir du cadre de l'invention, imaginer d'autres variantes et perfectionnements de détail et de même envisager l'emploi de moyens équivalents.

## Revendications

1. Boîte (1) électrique comportant une paroi latérale (11, 12, 13, 14), un fond (10) sur lequel est placé un châssis de fixation (2) pour un organe électrique ou une platine de fixation d'un organe électrique et des fûts (15) situés aux quatre coins de la boîte et destinés à recevoir chacun une vis de fixation, ledit châssis (2) comprenant :
- deux rails fixes (20a, 20b) parallèles montés sur le fond (10) de la boîte (1) et s'étendant chacun parallèlement à une face latérale de la boîte,
- deux rails transversaux (21a, 21b) s'étendant chacun suivant leur longueur entre les deux rails fixes (20a, 20b),
**caractérisée en ce que**,
- les rails transversaux (21a, 21b) et les rails fixes sont en matériau synthétique,
- les rails fixes (20a, 20b) présentent en tous points de leur longueur des moyens de réception pour la fixation du rail transversal (21a, 21b), de l'organe électrique ou de la platine de fixation,
- chaque rail transversal (21a, 21b) présente, en tous points de sa longueur s'étendant entre les deux rails fixes (20a, 20b), des moyens de réception pour la fixation de l'organe électrique ou de la platine de fixation,
- chaque rail transversal (21a, 21b) est symétrique et présente une forme générale en oméga s'étendant dans un plan parallèle au fond (10) de la boîte (1), ladite forme générale en oméga comprenant une partie centrale (215) agencée pour longer au plus près une face latérale de la boîte et deux ailes (214) d'extrémité pour contourner deux fûts de cette paroi latérale,
- les deux rails transversaux (21a, 21b) sont agencés de manière à ce que la distance d'écartement (d) entre eux ne se trouve pas limitée par la présence des fûts (15) aux coins de la boîte.

2. Boîte selon la revendication 1, **caractérisée en ce que** les moyens de réception du rail transversal (21a, 21b) comportent au moins une rigole (211) dans laquelle peut être insérée une vis de fixation de l'organe électrique ou de la platine de fixation.

3. Boîte selon la revendication 1 ou 2, **caractérisée en ce que** le rail transversal (21a, 21b) présente une section transversale dont le profil est adapté au clipsage de l'organe électrique ou de la platine de fixation.

4. Boîte selon l'une des revendications 1 à 3, **caractérisée en ce que** le rail transversal (21a, 21b) comporte des moyens de fixation (210) par clipsage sur chacun des rails fixes (20a, 20b).

5. Boîte selon l'une des revendications 1 à 4, **caractérisée en ce que** le rail transversal (21a, 21b) est fixé par vissage sur chacun des rails fixes (20a, 20b).

6. Boîte selon l'une des revendications 1 à 5, **caractérisée en ce que** chaque rail transversal (21a, 21b) comporte des moyens d'appui s'appuyant sur le fond (10) de la boîte (1) lors du montage de l'organe électrique ou de la platine de fixation.

7. Boîte selon la revendication 6, **caractérisée en ce que** les moyens d'appui sont constitués d'au moins un plot (212).

8. Boîte selon l'une des revendications 1 à 7, **caractérisée en ce que** les moyens de réception de chaque rail fixe (20a, 20b) comprennent au moins une rigole (201) dans laquelle peut être insérée une vis de fixation de l'organe électrique, de la platine de fixation ou d'une extrémité du rail transversal (21a, 21b).

9. Boîte selon l'une des revendications 1 à 8, **caractérisée en ce que** chaque rail fixe (20a, 20b) présente une section transversale dont le profil est adapté au clipsage de l'organe électrique, de la platine de fixation ou d'une extrémité du rail transversal (21a, 21b).

10. Boîte selon l'une des revendications 1 à 9, **caractérisée en ce que** les rails fixes (20a, 20b) présentent des moyens d'appui (202) pour s'appuyer sur le fond (10) de la boîte (1) lors du montage de l'organe électrique.

11. Boîte selon la revendication 10, **caractérisée en ce que** les moyens d'appui sont constitués par au moins un plot (202).

12. Boîte selon l'une des revendications 1 à 11, **caractérisée en ce que** le châssis de fixation (2) comporte des éléments de rehausse (4a, 4b) pouvant être fixés par vissage ou clipsage sur les rails fixes (20a, 20b) ou le rail transversal (21a, 21b).

13. Boîte selon l'une des revendications 1 à 12, **caractérisée en ce que** le châssis de fixation (2) comporte deux rails transversaux (21a, 21b) dont les positions transversales sont réglables afin de définir entre eux un écartement déterminé (d).

## Patentansprüche

1. Elektrodose (1), die eine Seitenwand (11, 12, 13, 14), einen Boden (10), auf dem ein Befestigungsrahmen (2) für ein elektrisches Bauteil oder eine Befestigungsplatte eines elektrischen Bauteils angeordnet ist, und Schäfte (15) aufweist, die sich an den vier Ecken der Dose befinden und dazu bestimmt sind, je eine Befestigungsschraube aufzunehmen, wobei der Rahmen (2) enthält:
- zwei parallele ortsfeste Schienen (20a, 20b), die auf den Boden (10) der Dose (1) montiert sind und sich je parallel zu einer Seitenfläche der Dose erstrecken,
- zwei Querschienen (21a, 21b), die sich je gemäß ihrer Länge zwischen den zwei ortsfesten Schienen (20a, 20b) erstrecken,
**dadurch gekennzeichnet, dass**:
- die Querschienen (21a, 21b) und die ortsfesten Schienen aus Synthetikmaterial sind,
- die ortsfesten Schienen (20a, 20b) an allen Punkten ihrer Länge Aufnahmeeinrichtungen zur Befestigung der Querschiene (21a, 21b), des elektrischen Bauteils oder der Befestigungsplatte aufweisen,
- jede Querschiene (21a, 21b) an allen Punkten ihrer sich zwischen den zwei ortsfesten Schienen (20a, 20b) erstreckenden Länge Aufnahmeeinrichtrungen zur Befestigung des elektrischen Bauteils oder der Befestigungsplatte aufweist,
- jede Querschiene (21a, 21b) symmetrisch ist und eine allgemeine Form eines Omega aufweist, das sich in einer Ebene parallel zum Boden (10) der Dose (1) erstreckt, wobei die allgemeine Form eines Omega einen zentralen Teil (215), der eingerichtet ist, um so nahe wie möglich einer Seitenfläche der Dose zu verlaufen, und zwei Endflügel (214) enthält, um zwei Schäfte dieser Seitenwand zu umrunden,
- die zwei Querschienen (21a, 21b) so eingerichtet sind, dass die Abstandsentfernung (d) zwischen ihnen nicht durch das Vorhandensein der Schäfte (15) an den Ecken der Dose begrenzt wird.

2. Dose nach Anspruch 1, **dadurch gekennzeichnet, dass** die Aufnahmeeinrichtungen der Querschiene (21a, 21b) mindestens eine Rinne (211) aufweisen, in die eine Befestigungsschraube des elektrischen Bauteils oder der Befestigungsplatte eingeführt werden kann.

3. Dose nach Anspruch 1 oder 2, **dadurch gekennzeichnet, dass** die Querschiene (21a, 21b) einen Querschnitt aufweist, dessen Profil für die Clipbefestigung des elektrischen Bauteils oder der Befestigungsplatte geeignet ist.

4. Dose nach einem der Ansprüche 1 bis 3, **dadurch gekennzeichnet, dass** die Querschiene (21a, 21b) Einrichtungen (210) zur Clipbefestigung an jeder der ortsfesten Schienen (20a, 20b) aufweist.

5. Dose nach einem der Ansprüche 1 bis 4, **dadurch gekennzeichnet, dass** die Querschiene (21a, 21b) durch Schraubverbindung an jeder der ortsfesten Schienen (20a, 20b) befestigt wird.

6. Dose nach einem der Ansprüche 1 bis 5, **dadurch gekennzeichnet, dass** jede Querschiene (21a, 21b) Auflageeinrichtungen aufweist, die sich bei der Montage des elektrischen Bauteils oder der Befestigungsplatte auf den Boden (10) der Dose (1) auflegen.

7. Dose nach Anspruch 6, **dadurch gekennzeichnet, dass** die Auflageeinrichtungen aus mindestens einem Klötzchen (212) bestehen.

8. Dose nach einem der Ansprüche 1 bis 7, **dadurch gekennzeichnet, dass** die Aufnahmeeinrichtungen jeder ortsfesten Schiene (20a, 20b) mindestens eine Rinne (201) enthalten, in die eine Befestigungsschraube des elektrischen Bauteils, der Befestigungsplatte oder eines Endes der Querschiene (21a, 21b) eingeführt werden kann.

9. Dose nach einem der Ansprüche 1 bis 8, **dadurch gekennzeichnet, dass** jede ortsfeste Schiene (20a, 20b) einen Querschnitt aufweist, dessen Profil für die Clipbefestigung des elektrischen Bauteils, der Befestigungsplatte oder eines Endes der Querschiene (21a, 21b) geeignet ist.

10. Dose nach einem der Ansprüche 1 bis 9, **dadurch gekennzeichnet, dass** die ortsfesten Schienen (20a, 20b) Auflageeinrichtungen (202) aufweisen, um sich bei der Montage des elektrischen Bauteils auf den Boden (10) der Dose (1) aufzulegen.

11. Dose nach Anspruch 10, **dadurch gekennzeichnet, dass** die Auflageeinrichtungen aus mindestens einem Klötzchen (202) bestehen.

12. Dose nach einem der Ansprüche 1 bis 11, **dadurch gekennzeichnet, dass** der Befestigungsrahmen (2) Aufstockelemente (4a, 4b) aufweist, die durch Schraubverbindung oder Clipbefestigung auf den ortsfesten Schienen (20a, 20b) oder der Querschiene (21a, 21b) befestigt werden können.

13. Dose nach einem der Ansprüche 1 bis 12, **dadurch gekennzeichnet, dass** der Befestigungsrahmen (2) zwei Querschienen (21a, 21b) aufweist, deren Querstellungen einstellbar sind, um zwischen ihnen einen bestimmten Abstand (d) zu definieren.

## Claims

1. Electric housing (1) comprising a side wall (11, 12, 13, 14), a base (10) on which is placed an attachment frame (2) for an electric unit or an attachment plate for an electric unit, and shafts (15) located at the four corners of the housing and designed to each receive one attachment screw, said frame (2) comprising:
- two parallel fixed rails (20a, 20b) mounted on the base (10) of the housing (1) and each extending parallel to a side face of the housing,
- two transverse rails (21a, 21b), each extending along their length between the two fixed rails (20a, 20b),
**characterized in that**
- the transverse rails (21a, 21b) and the fixed rails are made of a synthetic material,
- the fixed rails (20a, 20b) have, at all points along their length, receiving means for attaching the transverse rail (21a, 21b), the electric unit or the attachment plate,
- each transverse rail (21a, 21b) has, at all points along its length extending between the two fixed rails (20a, 20b), receiving means for attaching the electric unit or the attachment plate,
- each transverse rail (21a, 21b) is symmetric and has a general omega shape extending in a plane parallel to the base (10) of the housing (1), said general omega shape comprising a central portion (215) arranged so as to run as close as possible to a side face of the housing and two end flanges (214) in order to wrap around two shafts of this side wall,
- the two transverse rails (21a, 21b) are arranged such that the separation distance (d) between them is not limited by the presence of the shafts (15) at the corners of the housing.

2. Housing according to Claim 1, **characterized in that** the receiving means of the transverse rail (21a, 21b) comprise at least one gutter (211) into which it is possible to insert a screw for attaching the electric unit or the attachment plate.

3. Housing according to Claim 1 or 2, **characterized in that** the transverse rail (21a, 21b) has a cross section whose profile is suitable for snap-fitting the electric unit or the attachment plate.

4. Housing according to one of Claims 1 to 3, **characterized in that** the transverse rail (21a, 21b) comprises means for snap-fitting (210) onto each of the fixed rails (20a, 20b).

5. Housing according to one of Claims 1 to 4, **characterized in that** the transverse rail (21a, 21b) is attached by screwing onto each of the fixed rails (20a, 20b).

6. Housing according to one of Claims 1 to 5, **characterized in that** each transverse rail (21a, 21b) comprises bearing means pressing against the base (10) of the housing (1) during mounting of the electric unit or of the attachment plate.

7. Housing according to Claim 6, **characterized in that** the bearing means consist of at least one foot (212).

8. Housing according to one of Claims 1 to 7, **characterized in that** the receiving means of each fixed rail (20a, 20b) comprise at least one gutter (201) into which it is possible to insert a screw for attaching the electric unit, the attachment plate or an end of the transverse rail (21a, 21b).

9. Housing according to one of Claims 1 to 8, **characterized in that** each fixed rail (20a, 20b) has a cross section whose profile is suitable for snap-fitting the electric unit, the attachment plate or an end of the transverse rail (21a, 21b).

10. Housing according to one of Claims 1 to 9, **characterized in that** the fixed rails (20a, 20b) have bearing means (202) for pressing against the base (10) of the housing (1) during mounting of the electric unit.

11. Housing according to Claim 10, **characterized in that** the bearing means consist of at least one foot (202).

12. Housing according to one of Claims 1 to 11, **characterized in that** the attachment frame (2) comprises raising elements (4a, 4b) that can be attached by screwing or snap-fitting onto the fixed rails (20a, 20b) or the transverse rail (21a, 21b).

13. Housing according to one of Claims 1 to 12, **characterized in that** the attachment frame (2) comprises two transverse rails (21a, 21b) whose transverse positions are adjustable in order to define, between them, a determined separation (d).
